Europäisches Patentamt

European Patent Office

Office européen des brevets

(11) Publication number: **0 315 256**
**A1**

# EUROPEAN PATENT APPLICATION

(21) Application number: 88202401.1

(51) Int. Cl.4: **G11B 17/04**

(22) Date of filing: 28.10.88

(30) Priority: **02.11.87 NL 8702605**

(43) Date of publication of application:
**10.05.89 Bulletin 89/19**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **Einhaus, Hermanus Franciscus**
**c/o INT. OCTROOIBUREAU B.V. Prof.**
**Holstlaan 6**
**NL-5656 AA Eindhoven(NL)**

(74) Representative: **Schrijnemaekers, Hubert**
**Joannes Maria et al**
**Internationaal Octrooibureau B.V. Prof.**
**Holstlaan 6**
**NL-5656 AA Eindhoven(NL)**

(54) **Disc-record player comprising a disc-loading device.**

(57) The invention relates to a disc-record player comprising a device for recording and/or reading information on/from a rotating disc-record (3). The disc-record player comprises a frame (37), a turntable, which is rotable about an axis of rotation and which has a supporting surface for the disc, a disc-pressure member (43) for urging the disc onto the turntable in a press-down position, and a disc-loading device (29). The loading device comprises a drawer (23), which is movable between a slid-in position and a slid-out position, and which is adapted to carry the disc on a supporting surface (24) in the slid-out position, to transfer the disc to the turntable by loading movement, and to return it to the slid-out position by an unloading movement. The loading device further comprises a pivotal arrangement which at opposite sides of the drawer, viewed in a direction of movement of the drawer, comprises pivotal elements (31, 43), which are pivotally connected to the frame and which are pivotally interconnected by a connecting means (41). The pivotal arrangement comprises first stop means (49) which cooperate with second stop means (59) of the drawer at least during a final stage of the loading movement and an initial stage of the unloading movement of the drawer, the pivotal elements being pivoted in a first direction during said final stage and in an opposite second direction during said initial stage.

FIG.2

## Disc-record player comprising a disc-loading device

The invention relates to a disc-record player comprising a device for recording and/or reading information on from a rotating disc-record, in particular an optical disc, comprising a frame, a turntable, which is rotatable about an axis of rotation and which comprises a centring mandril and a supporting surface for the disc which has a centre hole, a disc-pressure member for pressing the disc onto the turntable in a press-down position, and a disc-loading device, which comprises a drawer which is movable between a slid-in and a slid-out position, which is adapted to support the disc on a supporting surface in the slid-out position, to transfer the disc to the turntable by a loading movement, and to return the disc to the slid-out position by an unloading movement.

Such disc-record players are known from European Patent Application 0,149,532 (herewith incorporated by reference) and comprise a housing which accommodates a frame carrying a loading device and a turntable. The loading device comprises a drawer which is slidable between an open and a closed position through a front opening in the housing, a frame, and a carrier which is movable relative to the frame to support an optical disc such as a Compact Disc. The loading device further comprises means with which the carrier is movable relative to the drawer frame and thus in an axial direction relative to the turntable.

In one of the disc-record players disclosed in said European Patent Application 0,149,532 said means comprise a number of pins which project laterally from the carrier and a corresponding number of inclined grooves formed in the drawer frame and engaged by the pins. When the carrier is moved past the turntable during the inward movement of the drawer the carrier is disposed in such a plane that a disc situated on the carrier cannot touch the turntable. Towards the end of the inward movement of the drawer the pins of the carrier move downwardly in said grooves in such a way that the drawer frame remains in the same plane and the carrier is moved to a lower level. In another disc-record player disclosed in said Application said means comprise four pivotal arms, which each have one end pivotally connected to the drawer frame and the other end to the carrier. By means of a fixed stop and a tension spring which acts between the carrier and the drawer frame the carrier is movable relative to the drawer frame between a first and a second level during the rectilinear inward and outward movement of the drawer, said arms being pivoted through a limited angle.

The use of a two-part drawer comprising said frame and said carrier which is movable relative to said frame renders the mechanical construction of the prior-art disc-record players rather intricate.

Moreover, it is to be noted that in the prior-art disc-record players the loading device comprises two supporting systems, i.e a supporting system for supporting the drawer with the carrier relative to the frame and a supporting system for supporting the carrier and the drawer frame relative to another. Obviously, such an expensive construction leads to a higher total cost price of the disc-record player. In addition, such a construction may have the drawback that during loading much mechanical noise is produced, in particular because both supporting systems operate simultaneously.

It is an object of the invention to provide a disc-record player of the type defined in the opening paragraph, comprising a loading device of simple construction, in order to reduce the number of parts and operations necessary during its manufacture. Another object is to minimise the noise produced by the loading device of the disc-record player during loading.

To this end the disc-record player in accordance with the invention is characterized in that the loading device comprises a pivotal arrangement comprising pivotal elements at opposite sides of the drawer, viewed in a direction of movement of the drawer, which elements are pivotally connected to the frame and are pivotally interconnected by connecting means, which pivotal arrangement comprises first stop means which cooperate with second stop means of the drawer at least during a final stage of the loading movement and an initial stage of the unloading movement of the drawer. the pivotal elements being pivoted in a first direction during said final stage to move the supporting surface of the drawer past the supporting surface of the turntable, viewed along the axis of rotation of the turntable, and being pivoted in an opposite second direction during said initial stage to lift the disc off the turntable.

The disc-record player in accordance with the invention has the advantage that for manufacturing the loading device a comparatively small number of simple parts are needed, whilst its simple mechanical construction ensures a correct sequence of the functions performed between the instant at which a disc is placed on the drawer until the instant at which the relevant disc is pressed against the turntable. Moreover, the overall height of the disc-record player can be small.

A preferred embodiment of the disc-record player in accordance with the invention is characterized in that the pivotal arrangement comprises two parallel guide rails, which extend at opposite sides of the drawer in the direction of movement of the drawer, which are each pivotally connected to at least two of the pivotal elements, and which cooperate with guide means of the drawer, the drawer being movable relative to the guide rails at least during those stages of the loading and the unloading movement in which the first and the second stop means do not cooperate with each other. This pivotal arrangement comprising a limited number of very simple parts forms a stable construction for rectilinearly moving the one-part drawer over a specific comparatively large distance into and out of the housing the disc-record player by hand or by means of an electrical drive unit.

Preferably, the above embodiment is further characterized in that the guide means of the drawer comprise two grooved or slotted parallel guideways formed in lateral surfaces of the drawer, the guide rails of the pivotal arrangement being slidable in said guideways, which can be formed easily. A further characteristic feature of this embodiment may be that the first stop means of the pivotal arrangement comprise end portions of the guide rails and in that the second stop means comprise guideway-bounding portions of the drawer. By suitably dimensioning the guide rails and the guideways, in particular in the longitudinal direction, this characteristic feature can be realised without any additional production steps.

Another preferred embodiment of the disc-record player in accordance with the invention is characterized in that pivotal elements comprise cylindrical projections formed with guide grooves and in that the drawer comprises two lateral guide surfaces which are formed with cylindrical recesses and which are slidable in the guide grooves, said cylindrical projections engaging said cylindrical recesses during pivoting of the pivotal elements. In this embodiment, which is an alternative to the first-mentioned preferred embodiment, the drawer can also be slid into and out of the housing of the disc-record player over a comparatively large distance. In principle, this preferred embodiment comprises an even smaller number of parts than siad first-mentioned preferred embobidement, although it has the same favourable properties. In this preferred embodiment, as well as in the other preferred embodiment, the stop means of the drawer abut against the stop means of the pivotal arrangement at a certain instant during the loading movement of the drawer, after which a pivotal movement of the pivotal elements results in the rectilinear loading movement of the drawer changing to an arcuate loading movement in order to position the disc onto the turntable, the mechanism being dimensioned in such a way that the turntable mandril can engage the centre hole of the disc. Moreover, which is very important for disc-record players having a small overall height, by suitably dimensioning and arranging the pivotal elements the distance over which the supporting surface of the drawer is moved parallel to the axis of rotation of the turnable can be small without any adverse effect on the correct operation of the loading device.

For practical reasons the last-mentioned preferred embodiment is suitably characterized in that pins which are oriented transversely of the pivotal elements are arranged in the cylindrical recesses in the lateral guide surfaces. Moreover, the first stop means of the pivotal arragement may simply comprise one or more of said projections and the second stop means of the drawer may comprise a raised portion or projection on the lateral guide surfaces.

If the last-mentioned preferred embodiment comprises an electric motor and a transmission mechanism for driving the drawer, the disc-record player is preferably also characterized in that the drawer comprises two toothed racks which extend in a direction of movement of the drawer and which comprise a straight portion and a circularly curved portion, and in that the transmission mechanism comprises two toothed wheels which mesh with the toothed racks, the sum of the radius of the one of the toothed wheels and the radius of one of the curved portions of the toothed racks being equal to the length of the pivotal elements, measured between pivotal axis near the frame and the central axis of the cylindrical projection. Such a drive construction is found to be reliable and to produce minimal noise in operation.

In order to limit the angles through which the pivotal elements are pivoted it is advisable to provide the pivotal arrangement with a stop which is stationary relative to the frame and which during that stage of the unloading movement of the drawer in which the first and the second stop means do not cooperate with each other retains the pivotal elements.

Another preferred embodiment, in which the disc-pressure member is secured to a pressure element which is movable between a press-down position and a position which is more remote from the turntable, is characterized in that at opposite sides, viewed in a direction of movement of the drawer, the pressure element is pivotally connected to two of the pivotal elements, the pressure element being moved to the press-down position during the loading movement and to said other position during the unloading movement of the drawer. This embodiment is very favourable if the distance between the pivotal elements at opposite sides of the drawer is comparatively small. In order to obtain a gradually built-up well-defined pressure, the pressure element is preferably provided with a spring construction, comprising for example a leaf spring having a free end portion which bears against the disc-pressure member and having a fixed portion secured to the pressure element, to exert a spring force directed towards the turntable on the disc-pressure member.

The disc-record player in accordance with the invention is suitable both for manual operation, in which case the drawer is moved by manual force alone, and for motorized operation, in which case the drawer is moved entirely or partly by means of an electric motor, generally via a transmission mechanism. In disc-record players intended for manual operation or equipped with specific transmission mechanisms it is advisable for reasons of stability to arrange a resilient element, for example a tension spring, between the frame and at least one of the pivotal elements, to retain the drawer by spring force in an end position reached after a pivotal movement of the pivotal elements. Generally such measures are not needed when, for example, the transmission is constructed as a self-locking mechanism.

The invention will now be described in more detail, by way of example with reference to the accompanying drawings. In the drawings:

Figure 1 is a diagrammatic perspective view of a disc-record player in accordance with the invention, the drawer, which carries an optical disc, being shown in the slid-out position,

Figure 2 is a perspective view of a first example of the loading device of the record player shown in Figure 1,

Figure 3A is a diagrammatic perspective view of the drive mechanism of the loading device shown in Figure 2;

Figure 3B diagrammatically shows the loading device of Figure 2 with the drawer in a partly extended position;

Figure 3C diagrammatically shows the loading device of Figure 2 with the drawer in the almost fully extended position;

Figure 4 is a perspective view of a second example of the loading device of the disc-record player shown in Figure 1.

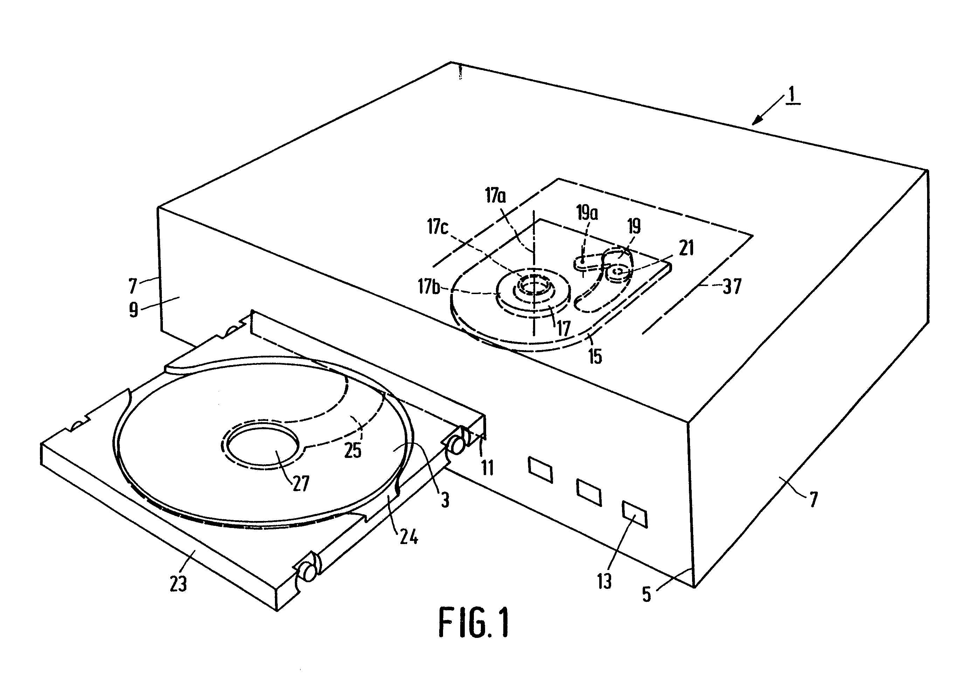

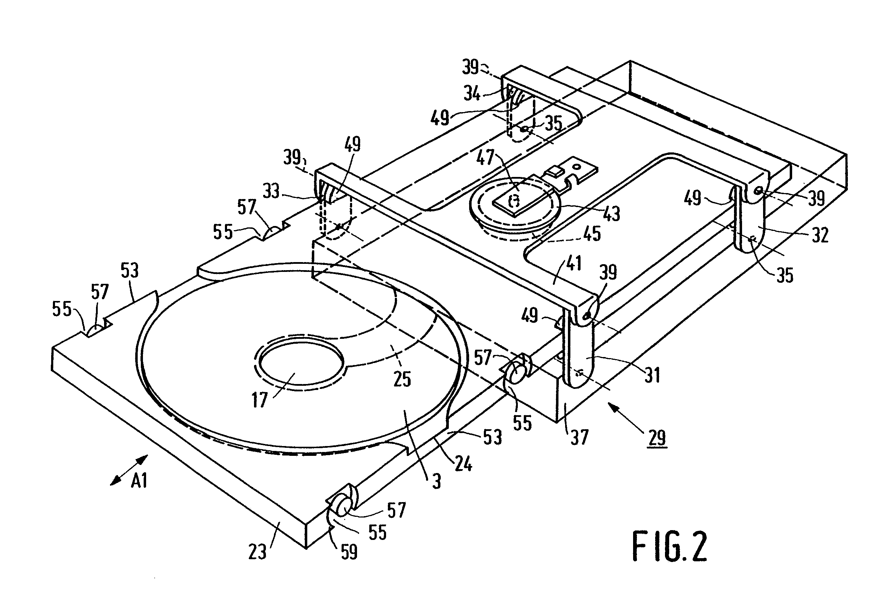

The disc-record player shown in Figure 1 is intended for optically reading an optical audio disc (CD) or an optical audio/video disc (CDV), bearing the numeral 3 in the drawings. The disc-record player 1 comprises a housing 5 with upright side walls 7 and a front wall 9, in which a front opening 11 is formed and on which controls 13 are arranged. Accommodated in the housing are a turntable 17, which is journalled in a deck 15 so as to be rotatable about an axis of rotation 17a, which has a supporting surface 17b, and which can be driven by an electric motor, not shown, an optical scanning unit 19, which is pivotally supported in the deck 15 and which comprises an objective 21, a frame (bearing the reference numeral 37 in Figure 1) which is connected to the deck 15 or which forms part thereof, and a loading device for transferring the optical disc 3 towards or away from the turntable 17. Figures 2, 3A, 3B, 3C and Figure 4 show two different loading devices, comprising inter alia a drawer, bearing the reference numeral 23 in Figure 1, which drawer can be slid into and out of the housing 5 through the front opening 11. Said scanning unit 19 is pivotable about a fixed pivotal axis 19a for radially following the information track of the optical disc 3 during reading of the disc. For a comprehensive description of the scanning unit reference is made to European Patent Application 0,074,131 (PHN 10.134; herewith incorporated by reference). It is to be noted that instead of the pivotable scanning unit shown herein a linearly movable scanning unit may be employed.

The drawer 23 is of rectangular shape and has a recessed supporting surface 24 for the optical disc 3. In the bottom of the drawer an aperture 25 is formed to allow the disc 3 to be scanned. Moreover, it is to be noted that the optical disc 3 has a centre hole 27 adapted to cooperate with a centring mandril 17c of the turntable 17.

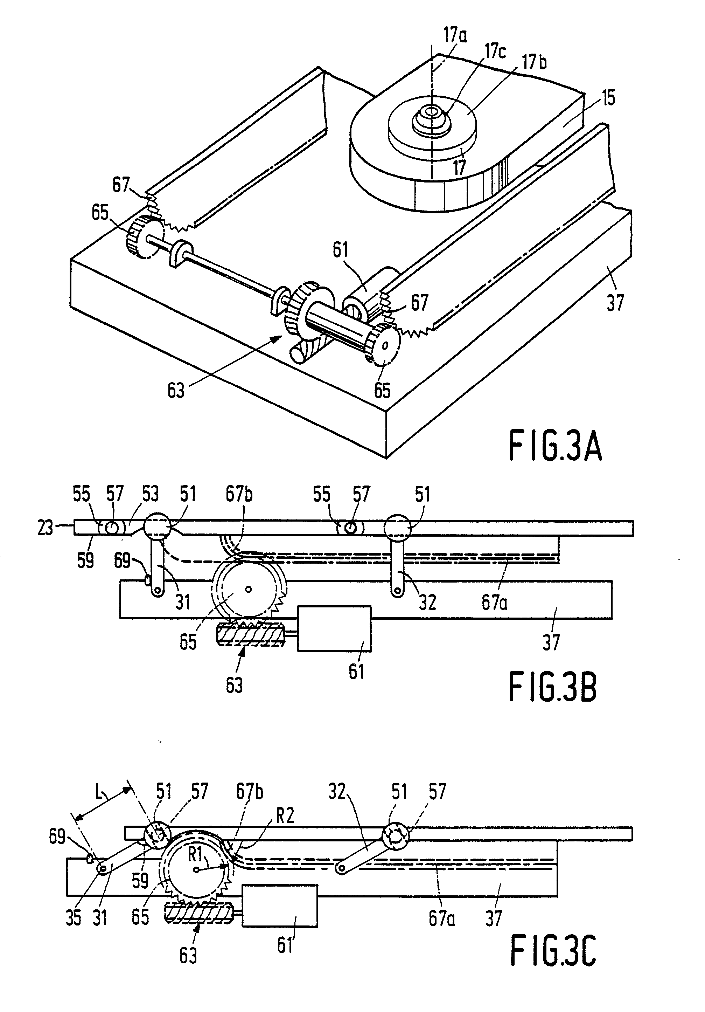

The loading device bearing 29 in Figures 2, 3A, 3B and 3C comprises the drawer 23 shown in Figure 1 and two pairs of pivotal elements 31, 32 and 33, 34 respectively. The pivotal elements 31 to 34 are pivotally supported in the frame 37 by means of pins 35, said frame being secured to the deck 15, as already stated. Moreover, the pivotal elements 31 to 34 are pivotally connected to a connecting member 41 by means of pins 39. In the present example the connecting member 41 also functions as a pressure element for a disc-pressure member 43, which projects from an opening 45 in the pressure element 41 and which is pressed against the bounding edge of the opening by a leaf spring 47 secured to the member 41. The pivotal elements 31 to 34 together with the connecting member 41 form a construction which is also referred to as "pivotal arrangement" in the present Application.

At a side facing the turntable each of the pivotal elements 31 to 34 comprises a cylindrical projection 49 formed with a guide groove 51. Together the guide grooves 51 are capable of rectilinearly guiding the drawer 23 when the pivotal elements 31 to 34 are in the position shown in Figures 2 and 3B. At opposite sides, viewed in the loading and unloading direction of the drawer 23 as indicated by the double arrow A in Figure 2, the drawer 23 for this purpose comprises lateral guide surfaces 53 adapted to cooperate with two guide grooves 51 disposed in line with one another. Each of the two lateral guide surfaces 53 is formed with two cylindrical recesses 55 situated at a distance from one another corresponding to the distance between two cylindrical projections 49 arranged at the same side of the drawer 23. In order to ensure a uniform travel of the lateral guide surfaces 53 in the guide grooves 51 pins 57 are arranged in the recesses 55.

The loading device of the disc-record player in accordance with the invention is constructed in such a way that the loading movement performed by the drawer 23 between its extended position, as shown for example in Figure 2, and its retracted position, as shown in Figure 3C, comprises two stages. During the first stage the drawer 23 is moved into the housing 5 of the disc-record player along a rectilinear path, the lateral guide surfaces 53 of the drawer 23 sliding through the guide grooves 51 in the projections 49 of the pivotal elements 31 to 34. This movement can be discontinued when a stop edge 59 formed by a protrusion on the drawer 23, abuts against one of the cylindrical projections 49 which are formed on the pivotal element 31 in Figures 2, 3B and 3C. The construction is dimensioned in such a way that the central axes of the projections 49 then coincide exactly with the central axes of the pins 57 and the projections 49 are rotatable in the cylindrical recess 53 relative to the lateral guide surfaces 53.

During the final stage following the above stage of the loading movement of the drawer 23 the drawer 23 performs a continued but downwardly directed movement, the pivotal elements 31 to 34 being pivoted about pivotal axes defined by the pins 35 in a clockwise direction. At the end of said final stage the drawer 23 is situated at such a level relative to the supporting surface 17B of the turntable 17 and the drawer 23 has performed such a movement relative to the turntable 17 that the disc 3 deposited on the turntable 17 during the loading movement is supported by the turntable 17 and is wholly clear of the drawer 23. The pressure element 41 is dimensioned in such a way relative to the other parts of the loading device that during said final stage of the loading movement the disc-pressure member 43 cannot contact the disc 3 until the centring mandril 17c of the turntable has engaged the centre hole 27 of said disc. At the end of the loading movement the disc-pressure member 43 presses the disc 3 against the supporting surface 17 of the turntable 17 with the desired pressure.

In the embodiment described in the foregoing the drawer 23 is motor-driven during the loading and the unloading movement. For this purpose an electric motor 61 is mounted on the frame 37, which may be connected elastically to a frame, not shown, of the housing, which motor drives two pinions 65 via a transmission mechanism, which pinions are each in mesh with one of the toothed racks 67 on the underside of the drawer 23. The two toothed racks 67 each comprises a straight portion 67a with which the pinions 65 cooperate during the rectilinear movement of the drawer 23 and a circularly curved portion 67b with which the pinions 65 cooperate during the final stage of the loading movement of the drawer 23. The pinions 65 and the curved portions 67b of the toothed racks 67 are dimensioned in such a way that the sum of the radii R1 and R2 of the pitch circle of one of the pinions 65 and one of the portions 67b is equal to the distance L between the pivotal axes of a pivotal element defined by the pins 35 and 39 (Figure 3C).

During the unloading movement of the drawer 23, when the drawer 23 is moved from the position shown in Figure 3C to the slid-out position shown in Figure 2, the pivotal elements 31 to 34 are pivoted anti-clockwise about the pins 35 during an initial stage of the unloading movement. This pivotal movement ceases when the pivotal elements 31 to 34 occupy the positions shown in Figure 3B, in which position at least one of the pivotal elements is retained by a stop 69 secured to the frame 37. It is obvious that during the unloading movement the drawer 23 is also driven by means of the electric motor 61, the drawer 23 being moved rectilinearly after the pivotal element 31 has reached the stop 69, until it occupies the position shown in Figure 2.

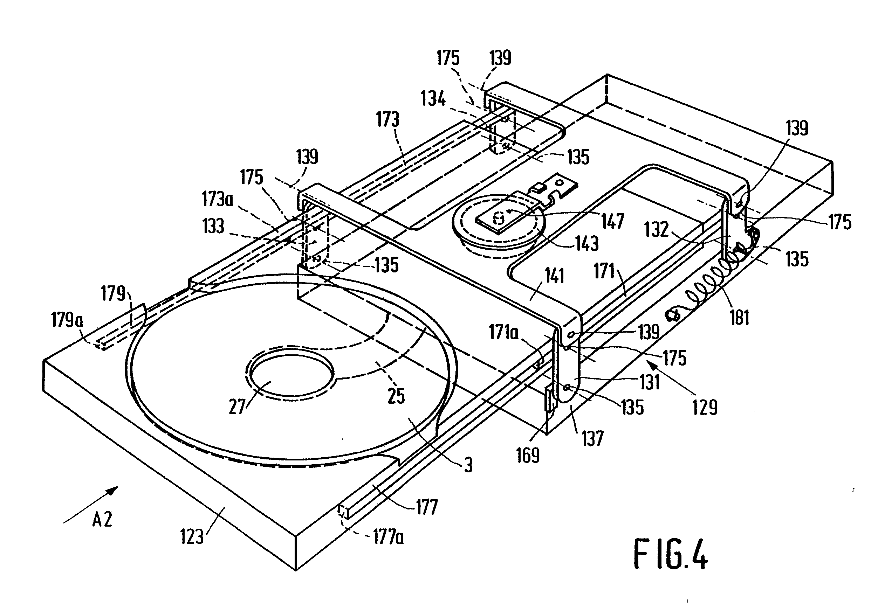

Figure 4 is a modification of the loading device of the disc-record player shown in Figure 1. Since both in respect of its construction and its operation this loading device 129 bears much resemblance to the loading device 29 described with reference to Figures 2, 3A, 3B and 3C. this modification will be described only briefly.

The loading device 129 comprises a frame 137, a pivotal arrangement comprising four pivotal elements 131 to 134 and a connecting member 141, and a drawer 123. The pivotal elements 131 to 134 are pivotable relative to the frame 137 about axes 135 defined by pins in the frame 137 and they are pivotable relative to the connecting member 141 about axes 139. The frame 135 has a stop 169 constituted by an upright edge of a raised portion to limit the movement of the pivotal arrangement. The loading device 129 further comprises two guide rails 171 and 173, the guide rail 171 being pivotally connected to the pivotal elements 131 and 132 and the guide rail 137 being pivotally connected to the pivotal elements 133 and 134. The relevant pivotal axes bear the reference numeral 175. Said connecting member 141 also serves as a pressure element and for this reason it is provided with a leaf spring 147 to urge a disc-pressure member 143 towards the turntable 17 (Figure 1).

The drawer 123, which carries the optical disc 3 shown in Figure 1, has two grooved guideways 177 and 179, formed in the lateral surfaces of the drawer 123, viewed in one of the directions of movement of the drawer 123, for example as indicated by the arrow A2. The dimensions of the guideways 177 and 179 are adapted to the dimensions of the guide rails 171 and 173, in order to ensure a smooth guidance. The guide rails 171 and 173 have end portions 171a and 173a which functions as stops for the drawer during the loading movement of the drawer 123 and then cooperate with guideway-bounding portions 177a and 179a of the drawer 123.

The loading device 129 shown in Figure 4 is intended for manual operation. For this purpose a force directed as indicated by the arrow A2 must be exerted on the drawer 123 for the loading movement of the drawer 123. Under the influence of this force the drawer 123 initially moves rectilinearly until the end portions 171a and 173a of the guide rails 171 and 173 reach the end portions 177a and 179a of the guideways 177 and 179, after which, as the loading movement of the drawer 123 continues, the pivotal elements 131 to 134 are pivoted about the axes 135, causing the drawer 123 to perform a downward movement and the pressure element 141 to be moved towards the turntable of the disc-record player. A tension spring 181, arranged between the frame 137 and the pivotal element 132, ensures a stable position of the pivotal arrangement and the drawer 123 after termination of the loading movement. The drawer 123 can be returned from this position to the extended position for example by means of a mechanism, not shown, which is controlled by means of an eject button.

It is obvious that the invention is not limited to the embodiments described herein and a variety of embodiments are possible within the scope of the invention.

## Claims

1. A disc-record player comprising a device for recording and/or reading information on/from a rotating disc-record, in particular an optical disc, comprising a frame, a turntable, which is rotatable about an axis of rotation and which comprises a centring mandril and a supporting surface for the disc which has a centre hole, a disc-pressure member for pressing the disc onto the turntable in a press-down position, and a disc-loading device, which comprises a drawer which is movable between a slid-in and a slid-out position, which is adapted to support the disc on a supporting surface in the slid-out position, to transfer the disc to the turntable by a loading movement, and to return the disc to the slid-out position by an unloading movement, characterized in that the loading device comprises a pivotal arrangement comprising pivotal elements at opposite sides of the drawer, viewed in a direction of movement of the drawer, which elements are pivotally connecte to the frame and are pivotally interconnected by connecting means, which pivotal arrangement comprises first stop means which cooperate with second stop means of the drawer at least during a final stage of the loading movement and an initial stage of the unloading movement of the drawer, the pivotal elements being pivoted in a first direction during said final stage to move the supporting surface of the drawer past the supporting surface of the turntable, viewed along the axis of rotation of the turntable, and being pivoted in an opposite second direction during said initial stage to lift the disc off the turntable.

2. A disc-record player as claimed in Claim 1, characterized in that the pivotal arrangement comprises two parallel guide rails, which extend at opposite sides of the drawer in the direction of movement of the drawer, which are each pivotally connected to at least two of the pivotal elements, and which cooperates with guide means of the drawer, the drawer being movable relative to the guide rails at least during those stages of the loading and the unloading movement in which the first and the second stop means do not cooperate with each other.

3. A disc-record player as claimed in Claim 2, characterized in that the guide means of the drawer comprise two grooved or slotted parallel guideways formed in lateral surfaces of the drawer, the guide rails of the pivotal arrangement being slidable in said guideways.

4. A disc-record player as claimed in Claim 3, characterized in that the first stop means of the pivotal arrangement comprise end portions of the guide rails and in that the second stop means comprise guideway-bounding portions of the drawer.

5. A disc-record player as claimed in Claim 1, characterized in that the pivotal elements comprise cylindrical projections formed with guide grooves and in that the drawer comprises two lateral guide surfaces which are formed with cylindrical recesses and which are slidable in the guide grooves, said cylindrical projections engaging said cylindrical recesses during pivoting of the pivotal elements.

6. A disc-record player as claimed in Claim 5, characterized in that pins which are oriented transversely of the pivotal elements are arranged in the cylindrical recesses in the lateral guide surfaces.

7. A disc-record player as claimed in Claim 5 or 6, characterized in that the first stop means of the pivotal arrangement comprise one or more of said projections and in that the second stop means of the drawer comprise a stop edge formed on the lateral guide surfaces.

8. A disc-record player as claimed in Claim 5, 6 or 7, in which the drawer can be driven by an electric motor via a transmission mechanism, characterized in that the drawer comprises two toothed racks which extend in a direction of movement of the drawer and which comprise a straight portion and a circularly curved portion, and in that the transmission mechanism comprises two toothed wheels which mesh with the toothed racks, the sum of the radius of one of the toothed wheels and the radius of one of the curved portions of the toothed racks being equal to the length of the pivotal elements, measured between the pivotal axis near the frame and the central axis of the cylindrical projection.

9. A disc-record player as claimed in any one of the preceding Claims, charactarized in that the pivotal arrangement comprises at least one stop which is stationary relative to the frame and which during that stage of the unloading movement of the drawer in which the first and second stop means do not cooperate with one another cooperates with one of the pivotal elements.

10. A disc-record player as claimed in any one of the preceding Claims, in which the disc-pressure member is secured to a pressure element which is movable between a press-down position and a position which is more remote from the turntable, characterized in that at opposite sides, viewed in a direction of movement of the drawer, the pressure element is pivotally connected to two of the pivotal elements, the pressure element being moved to the press-down position during the loading movement and to said other position during the unloading movement of the drawer.

11. A disc-record player as claimed in Claim 10, characterized in that the pressure element is provided with a spring construction to exert a spring force oriented towards the turntable on the disc-pressure member.

12. A disc-record player as claimed in any one of the preceding Claims, characterized in that a resilient element is arranged between the frame and at least one of the pivotal elements, to retain the drawer by spring force in an end position defined by a pivotal movement of the pivotal elements.

FIG.1

EP 0 315 256 A1

1-ⅣV-PHN 12306

FIG.2

EP 0 315 256 A1

FIG.3A

FIG.3B

FIG.3C

FIG.4

EP 0 315 256 A1

4 - IV- PHN 12306

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 158 360 (NIPPON GAKKI SEIZO) * Seite 13, Zeile 21 - Seite 16, Zeile 21; Seite 28, Zeile 9 - Seite 36, Zeile 14; Ansprüche; Figuren * --- | 1-3,8,9 ,12 | G 11 B 17/04 |
| P,A | EP-A-0 250 111 (C. OLIVETTI) * Spalte 3, Zeile 22 - Spalte 5, Zeile 23; Figuren * --- | 1,2,9, 12 | |
| A | US-A-4 509 158 (S.S. KANG) * Zusammenfassung; Spalte 2, Zeilen 4-58; Spalte 3, Zeile 40 - Spalte 5, Zeile 36; Figuren * --- | 1,2,9, 12 | |
| A | US-A-3 833 926 (R.P. HALL) * Spalte 9, Zeile 1 - Spalte 10, Zeile 10; Figuren * --- | 1 | |
| A | US-A-3 845 502 (R.L. PAUS) * Spalte 3, Zeile 16 - Spalte 4, Zeile 41; Figuren * --- | 1 | |
| D,A | EP-A-0 149 532 (SONY) --- | | RECHERCHIERTE SACHGEBIETE (Int. Cl.4) |
| A | EP-A-0 026 152 (AIWA) ----- | | G 11 B |

Der vorliegende Recherchenbericht wurde für alle Patentansprüche erstellt

| Recherchenort | Abschlußdatum der Recherche | Prüfer |
|---|---|---|
| DEN HAAG | 02-02-1989 | DECLAT M.G. |